# EUROPEAN PATENT SPECIFICATION

(11) **EP 3 927 610 B1**
(45) Date of publication and mention of the grant of the patent: **19.04.2023**
(21) Application number: 20713956.9
(22) Date of filing: 20.02.2020
(51) Int. Cl.: B62K 21/02, B62K 25/04, B62L 1/00

(54) **A SADDLED VEHICLE WITH DYNAMIC ADJUSTMENT OF THE TRAIL OR OF THE ATTITUDE**
EIN SATTELFAHRZEUG MIT DYNAMISCHER ANPASSUNG DES NACHLAUFS ODER DER HALTUNG
UN VÉHICULE À SELLE AVEC RÉGLAGE DYNAMIQUE DE LA TRAÎNÉE OU DE L'ATTITUDE

(30) Priority: 22.02.2019 IT 201900002561
(43) Date of publication of application: 29.12.2021
(73) Proprietor: Piaggio & C. S.P.A., 56025 Pontedera Pisa (IT)
(72) Inventor: RAFFAELLI, Andrea, 56025 Pontedera (PI) (IT); SANTUCCI, Mario, 56025 Pontedera (PI) (IT)
(74) Representative: Mannucci, Michele
(86) International application number: PCT/IB2020/051415
(87) International publication number: WO 2020/170182

(56) References cited:
- EP-A1- 1 506 113
- JP-A- S59 192 686
- US-A- 4 533 153
- US-A1- 2002 079 670
- US-A1- 2019 047 658

## Description

### TECHNICAL FIELD

The present invention relates to the field of saddle-type motor vehicles, with two or three wheels, such as for example motorcycles and scooters.

### PRIOR ART

One of the important parameters that must be taken into account when designing a motor vehicle or other saddle-type vehicle is the so-called trail. As known, the trail is defined as the distance between the point of contact of the steered wheel of the motor vehicle with the ground and the point of intersection of the steering axis with the ground. The trail is positive if the point of intersection between the steering axis and the ground is ahead (with reference to the travel direction of the motor vehicle), with respect to the ground-steered wheel point of contact. The trail is negative in the reverse case.

The trail has a fundamental role in defining the stability and handling of a motor vehicle. The greater the trail, the greater the stability of the motor vehicle. Stability is given by the tendency of the steered wheel to move back to a zero steering angle due to the friction between the wheel and the ground during the steering. The lower the trail, *i.e.* the closer the intersection point between the steering axis and the ground to the contact point between the steered wheel and the ground, the more the vehicle is manageable and consequently less stable.

During the design phase, the trail is determined by the designer so that the motor vehicle is safe and pleasant to drive, offering sufficient stability but at the same time adequate handling. In any case, the value of the trail is determined on the basis of compromise considerations between the double need for high stability, especially at high speeds, and sufficient handling, especially at low speed.

Systems have also been developed to modify the trail according to the driving conditions. For example, US 4,600,207 discloses a motor vehicle wherein the steering column has an inclination adjustable by means of an eccentric according to the driving conditions. A complex system of dynamic adjustment of the trail is disclosed in US 9,162,726. This prior art document discloses a device with an actuator, which modifies the inclination of the steering column with consequent variation of the trail. The variation is automatically and dynamically obtained by means of a complicated and expensive automatic control system, which takes into account driving parameters, for example speed.

EP1506113 (WO03/099645) and US 4,533,153 disclose suspensions for the steered wheel of a vehicle, wherein the spindle of the wheel is supported by four-bar linkage structure, whose rocker arms are pivoted to a steering column. Said documents disclose the features of the preamble of claim 1.

The known systems are not very efficient, because they do not allow a dynamic adaptation of the trail, or too complex and expensive, and therefore also susceptible to failures. It would therefore be useful to have a simpler and less expensive, but at the same time efficient, system that allows a dynamic modification of the trail of a tilting or rolling vehicle, *i.e.* a saddle-type vehicle, such as in particular a motor vehicle with one or two front steered wheels, for instance.

### SUMMARY OF THE INVENTION

According to the invention, a saddle-type motor vehicle is provided, such as in particular but not exclusively a motorcycle, comprising a frame, a rear drive wheel and at least one front steered wheel rotatably supported by a spindle constrained to a steering structure, to which a damped suspension is associated. Between the spindle and the steering structure, a device is interposed for varying the position of the rotation axis of the front steered wheel with respect to the steering structure, and more properly with respect to the steering axis, as a function of a vehicle braking action. The device for varying the position of the rotation axis of the front steered wheel with respect to the steering structure comprises a guide seat, to which the spindle is movably engaged.

In practical embodiments, the spindle is housed in the guide seat so as to slide, *i.e.* to translate within it.

In some embodiments, the device has an actuator, which is directly or indirectly operated, for example, via the brake control member. The actuator controls the displacement of the rotation axis of the front steered wheel with respect to the steering axis in response to a control signal (electric or other) triggered by the action of the driver on the brake activation member.

In other embodiments, particularly advantageous for their construction simplicity and for their reliability, the device for varying the position of the axis of the front steered wheel with respect to the steering axis is configured to cause this variation in response to a dynamic load generated by a braking torque acting on the front steered wheel.

As will be clarified later, this can be obtained, for example, by providing the spindle or support pin of the front steered wheel with a degree of freedom of movement in a suitably shaped guide, for example having the shape of an arc of circumference around an axis parallel to the rotation axis of the front steered wheel, but not coinciding therewith. The movement can be counteracted by a contrasting member or counteracting member, for example of an elastic nature, in such a way that the spindle moves away from its rest position due to a dynamic load caused by the braking and in response thereto. The spindle is held, *i.e.* returned to the rest position, by the counteracting member or contrast member when the dynamic load ceases or decreases.

Steering axis refers to the axis around which the steering movement of the front steered wheel is performed.

The variation of the position of the rotation axis of the front steered wheel with respect to the steering axis can be mainly in the horizontal direction or mainly in the vertical direction. In the first case, the displacement causes a variation of the offset and this variation will significantly affect the trail. If the variation of the trail is in the sense of a reduction of the trail during braking, the effect of maintaining high stability while driving without braking and greater handling (reduced trail) during braking is obtained, for example at the entrance of a curve.

The effect is dynamically obtained, directly in response to the braking force applied on the front steered wheel by the brake.

If the displacement of the rotation axis is in a mainly vertical direction, a variation effect of the attitude of the motor vehicle is obtained during braking.

Further advantageous features and embodiments of the motor vehicle according to the present invention are outlined in the attached claims and are described below with reference to practical exemplary embodiments.

### BRIEF DESCRIPTION OF THE DRAWINGS

The invention will be better understood by following the description and the attached drawings, which illustrate an exemplary and non-limiting embodiment of the invention. More specifically, the drawing shows:
Fig. 1 a side view of a motor vehicle, comprising a device according to the present invention;
Figs. 2 and 3 an operating diagram of the device in a first embodiment and in two driving conditions;
Fig. 2A an enlargement of a detail of Fig. 2;
Figs. 4 and 5 an operating diagram of the device in a second embodiment and in two driving conditions;
Figs. 6 and 7 an operating diagram of the device in a third embodiment and in two driving conditions;
Figs. 8 and 9 an operating diagram of the device in a fourth embodiment and in two driving conditions; and
Fig. 10 a diagram of a further embodiment.

### DETAILED DESCRIPTION OF EMBODIMENTS

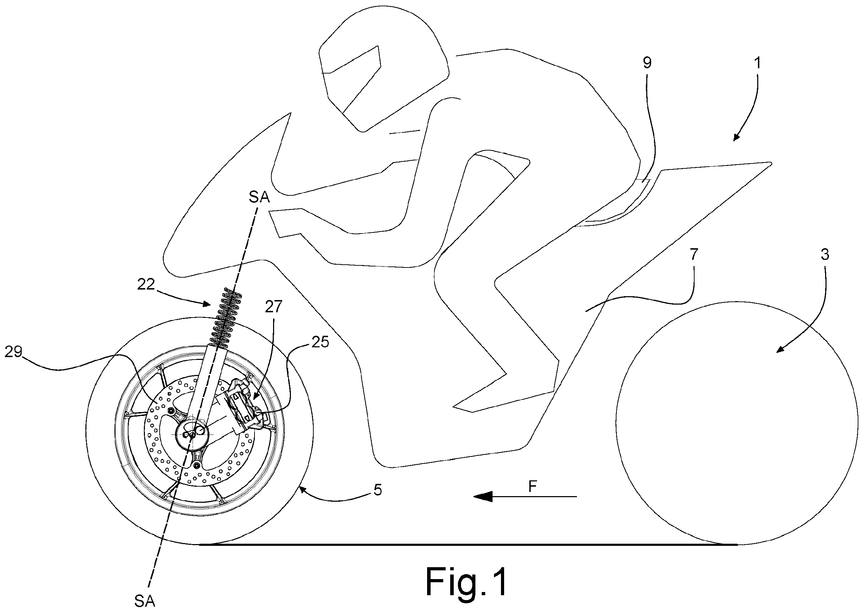

Fig. 1 shows a schematic side view of a saddle-type motor vehicle , which can be provided with a control device of the trail or the attitude according to the present invention. The vehicle is indicated as a whole with 1 and comprises a rear drive wheel 3, at least one front steered wheel 5 and a frame 7 with a saddle 9.

The frame 7 comprises a steering head tube in which a steering column constrained to a handlebar is rotatably housed, elements not shown in Fig. 1 and known per se. The steered head tube defines a steering axis SA-SA. The rotation of the front wheel 5 around the steering axis SA-SA is controlled by the handlebar.

In the illustrated case, the front steered wheel 5 is single, but what is described herein can also be applied to a three-wheel tilting motor vehicle, with two front steered wheels. In this case, what is described herein for a single front steered wheel is repeated for the other front steered wheel.

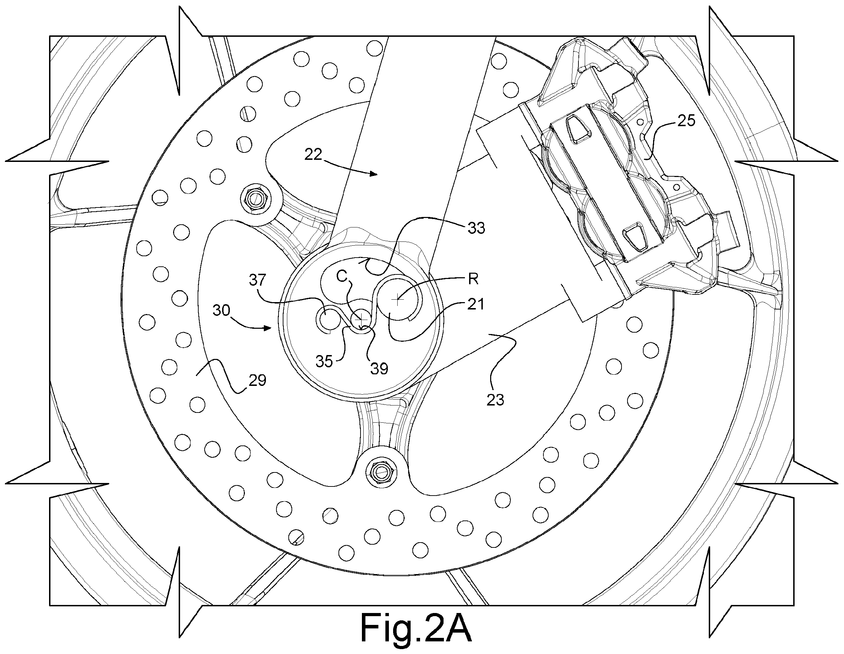

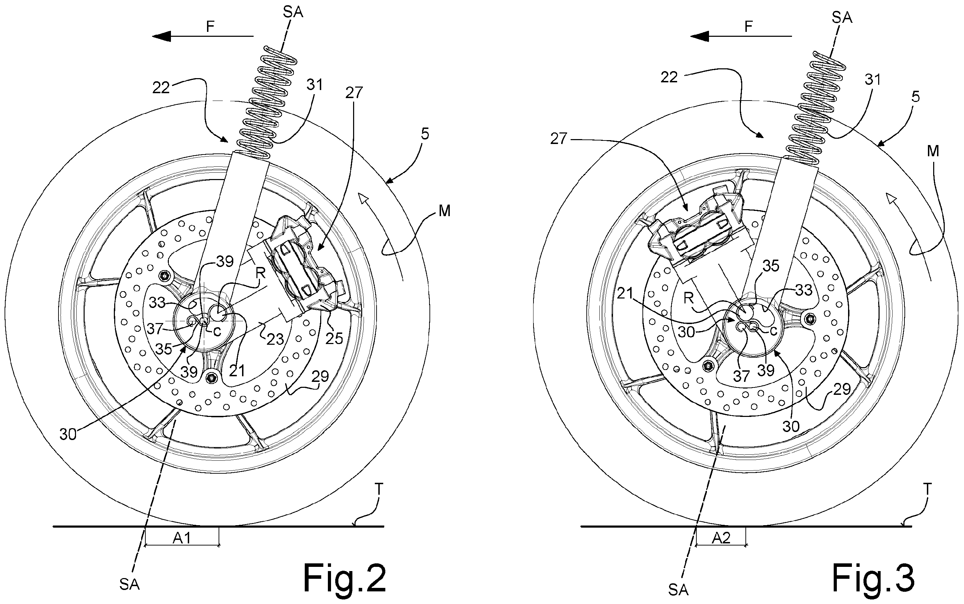

Continuing to refer to Fig. 1, Figs. 2 and 3 show a detail of the front steered wheel 5 and related suspension 31, as well as the device according to the present invention in a first embodiment and in two distinct driving attitudes. More precisely Fig. 2 shows the position taken by the device in conditions where the motor vehicle is stationary or running at constant speed and in Fig. 3 in a condition of the motor vehicle during braking. Fig. 2A shows an enlargement of the central area of Fig. 2.

In the illustrated schematic embodiment, the steered wheel 5 is supported by a pin or spindle 21, the axis of which defines the rotation axis of the wheel. In Figs. 2 and 3, R indicates the intersection point of the rotation axis of the wheel, and therefore the axis of the spindle 21, with the plane of the figure.

An arm 23 is integral with the spindle 21 and carries the calipers 25 of a brake 27 of the front steered wheel 5. In the illustrated example, the brake is a disc brake and the calipers 25 act on a disc 29 integral with the front steered wheel 5.

A damped suspension 31 is associated with the front steered wheel 5. In the simplified diagram illustrated in the attached drawing, the suspension 31 is represented as an elastic element in the form of a compression coil spring. Inside the spring or next to it, a shock absorber is arranged, not shown in detail. In the simplified diagram illustrated in Figs. 2 and 3, the suspension 31 is approximately in line with the steering axis SA-SA. This arrangement is, however, to be considered merely exemplary.

The suspension 31 forms part of a steering structure 22, through which the steering movement around the steering axis SA-SA is transmitted by the handlebar to the front steered wheel 5.

When the motor vehicle 1 is running and the front brake 27 is activated, a torque is transmitted from the disc 29 of the brake 27 to the arm 23. Since the arm 23 is integral with the spindle or pin 21 of the wheel 5, a torque is generated on the arm 23, which tends to rotate the arm 23 according to the arrow M with respect to the steering structure 22. Normally, this movement is prevented by a rigid constraint between the spindle 21 and the steering structure 22. According to what is described here, conversely, this movement is allowed in a limited and controlled manner, in order to obtain a variation in the attitude of the motor vehicle 1. This attitude variation is dynamically caused by the braking force that generates the rotation moment represented by the arrow M.

Suitably, the movement is such as to cause a variation in the distance between the steering axis SA-SA and the rotation axis R of the front steered wheel, *i.e.* the axis of the spindle or pin 21.

To allow this movement, the pin or spindle 21 of the front steered wheel 5 is movably mounted with respect to the steering structure 22 through the interposition of a device generally indicated with 30, which allows to modify the position of the rotation axis of the front steered wheel 5 (R axis) with respect to the position of the steering structure 22.

In some embodiments, the device 30 comprises a guide 33, to which the spindle or pin 21 of the front steered wheel 5 is constrained so as to be able to move along said guide 33. The guide 33 can be integral with the steering structure 22.

In the illustrated exemplary embodiment, the guide 33 of the device 30 is schematically represented as a curved slot 33. Preferably, the curved slot 33 has a constant curvature, *i.e.* its central line extends according to an arc of a circumference. The curved slot 33 can have a center of curvature C. When the brake 27 is activated, the torque that is generated on the arm 23 stresses the arm 23 and the pin or spindle 21 integral therewith to rotate around an axis passing through the point C and parallel to the axis R of the front steered wheel 5.

It should be understood that the curved slot 33 is to be considered as an example of a constraint between the spindle or pin 21 of the wheel 5 and the steering structure 22, which constraint allows a reciprocal movement between the spindle 21 and the steering structure 22. This movement, as will become clear from what is described below, can modify the trail of the motor vehicle 1, as it causes a predominantly horizontal displacement of the rotation axis R of the wheel with respect to the steering axis SA-SA. This mainly horizontal movement causes the translation of the contact point between the wheel and the ground T with respect to the intersection point between the steering axis SA-SA and the ground T.

The consequence of the movement of the arm 23 and of the spindle 21 along the guide formed by the curved slot 33 tends to bring the spindle 21 from the position of Fig. 2 to the position of Fig. 3. The spindle 21 and consequently the rotation axis R of the front steered wheel 5 move from one end to the other of the curved slot 33. This corresponds to a displacement of the contact point between the front steered wheel 5 and the ground T, with consequent reduction of the trail. While in the position of Fig. 2 the trail is equal to A1, in Fig. 3 the trail is smaller and is equal to A2.

This movement and the consequent dynamic variation of the trail are dynamically caused by the torque generated during braking. The movement is counteracted by a counteracting force generated by a special member of the device 30 and which acts on the rigid system comprising the pin or spindle 21 of the wheel, the arm 23 and the calipers 25 of the brake 27.

For example, this counteracting force can be generated by an elastic system comprising one or more springs.

The counteracting force stresses the system consisting of front steered wheel 5, spindle or pin 21, arm 23, disc 29 and calipers 25 of the brake 27 towards the position of Fig. 2. This is the position wherein the trail has the maximum value A1. The more or less intense braking action generates the torque M which contrasts the counteracting force to a greater or lesser extent and causes a greater or lesser forward displacement, *i.e.* in concordant with the travel direction F of the motor vehicle 1, according to the arrow M of the spindle or pin 21 and of the front steered wheel 5. This movement corresponds to a greater or lesser reduction of the trail, until the minimum trail A2 (Fig. 3).

In the illustrated example, the counteracting force is generated by a laminar spring 35 wound around the pin or spindle 21 of the wheel and around pins 37, 39 which are integral with the steering structure 22. The laminar spring 35 deforms accumulating elastic energy from the position of Fig. 2, where it is preloaded, until the deformed position of Fig. 3.

As the torque generated by the braking effect decreases or ceases, the counteracting force applied by the laminar spring 35, or other suitable elastic member, brings the spindle or pin 21 of the front steered wheel 5 back to the position of Fig. 2.

In some embodiments, the simple elastic system can be replaced by a viscoelastic system, which makes the displacement of the spindle or pin 21 of the front steered wheel 5 along its path more gradual. For example, a suitable shock absorber, not shown, can be provided for this purpose.

In the embodiment shown in Figs. 2 and 3, the force generated by the braking causes a displacement of the rotation axis R of the front steered wheel 5 in a predominantly horizontal direction. The displacement is such that the rotation axis R of the front steered wheel 5 moves forward in the travel direction (arrow F), with respect to the steering axis SA-SA and consequently a reduction of the trail is obtained (from A1 to A2; Figs. 2 and 3).

This condition is particularly advantageous, since it is generally preferred and desired to obtain greater handling at low speeds and greater stability at high speeds. The greater trail A1 (Fig. 2) makes the motor vehicle 1 more stable, while the minor trail A2 (Fig. 3) makes it more manageable.

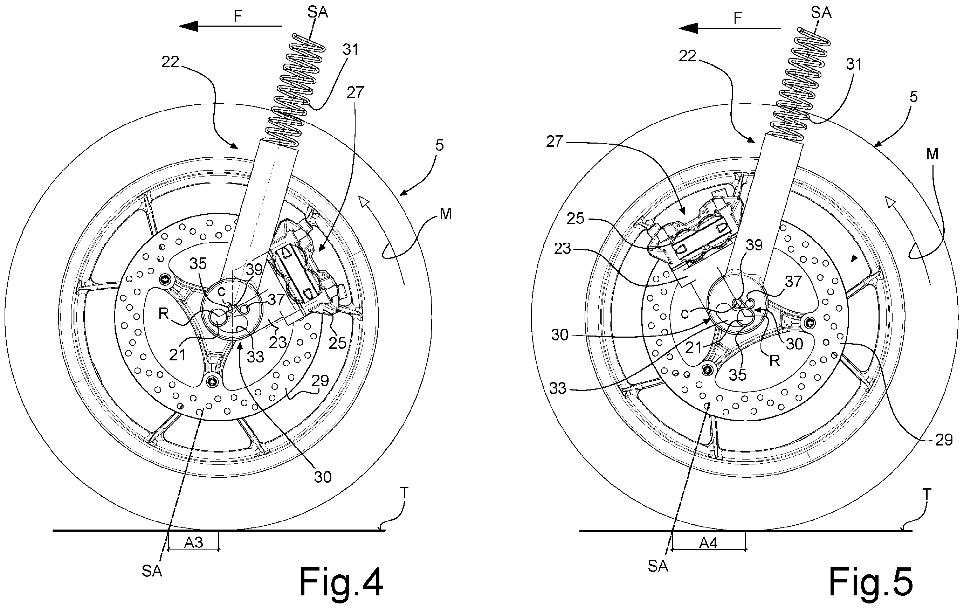

In a different embodiment, a dynamic behavior of the motor vehicle 1 opposite to that described above can be obtained, with an increase of the trail during braking. This different behavior can be achieved, in the embodiment illustrated in Figs. 4 and 5, with a simple variation of the mounting position of the device which allows the variation of the trail and which includes the guide 33 and the counteracting elastic member 35.

Figs. 4 and 5 show the same system of Figs. 2 and 3 with the same elements and the same reference numbers, but mounted in a different position. In Fig. 4 the system is shown in its rest condition, *i.e.* the condition in which the elastic system comprising the spring 35 is in a conditions of minimum energy (minimum deformation). In Fig. 5 the vehicle is braking. The torque generated by the braking force of the calipers 25 on the disc 29 of the brake 27 deforms the elastic element (spring 35) with consequent displacement according to the arrow M of the pin or spindle 21 of the front steered wheel 5 towards the end of the slot 33 opposite to the one in which it is located in the position of Fig. 4.

As can be understood by comparing Figs. 4 and 5, in this case the trail increases from A3 (Fig. 4) to A4 (Fig. 5).

In Figs. 2, 3, 4 and 5 the configuration of the front end of the motor vehicle 1, and in particular the assembly of the spindle or pin 21 of the front steered wheel 5 on the steering structure 22, are such as to cause, in the event of braking, a mainly horizontal displacement of the pin or spindle 21 and consequent variation of the trail. However, with a different arrangement of the device described herein, it is possible to obtain a different behavior of the motor vehicle 1 during braking, with a displacement of the R axis of the front steered wheel 5 with respect to the steering structure 22 in a predominantly vertical rather than horizontal direction. In this way, the device 30 which, in the event of braking, allows the dynamic displacement of the rotation axis R of the front steered wheel 5 with respect to the steering structure 22, causes a pro-dive or anti-dive effect, depending upon the chosen configuration. As known to those skilled in the art, pro-dive refers to an effect that contributes to the sinking of the front part of the motor vehicle during braking, while anti-dive refers to a sinking opposing effect.

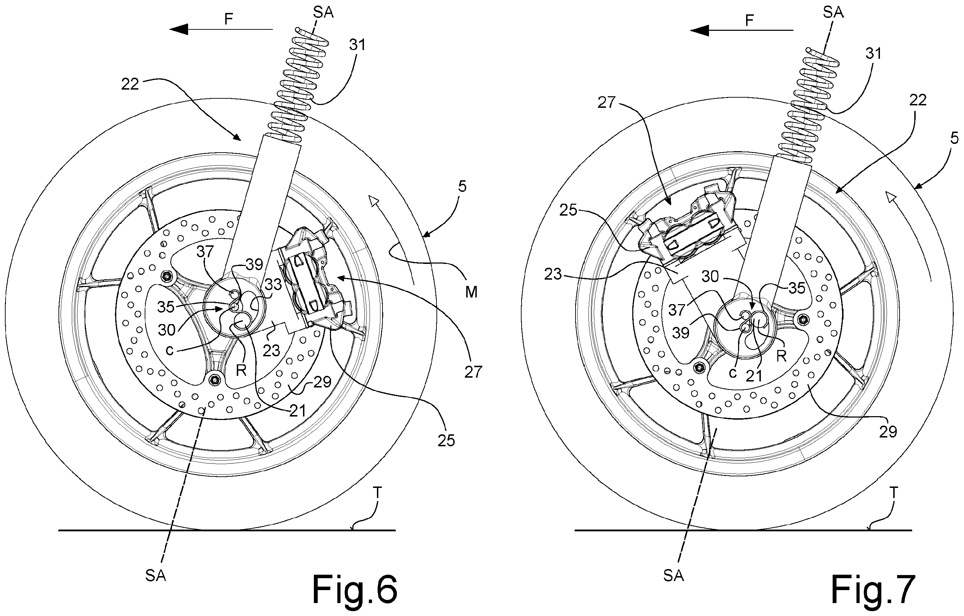

Figs. 6, 7, 8, 9 show two different configurations of this type, in which the displacement caused by the device 30 is mainly vertical.

More particularly Figs. 6 and 7 show two extreme positions that the spindle or pin 21 of the front steered wheel 5 can take with respect to the steering structure 22 in a first configuration. In this, during braking, the axis R of the front steered wheel 5 tends to displace upwards with respect to the steering structure 22 and therefore the motor vehicle 1 will tend to sink more during braking (pro-dive effect). The movement caused by the displacement of the rotation axis R of the front steered wheel 5 around the axis C is such that the steering structure 22 is lowered, *i.e.* it performs a movement in accordance with the sinking movement (suspension compression) determined by the displacement of the load consequent to the deceleration caused by braking.

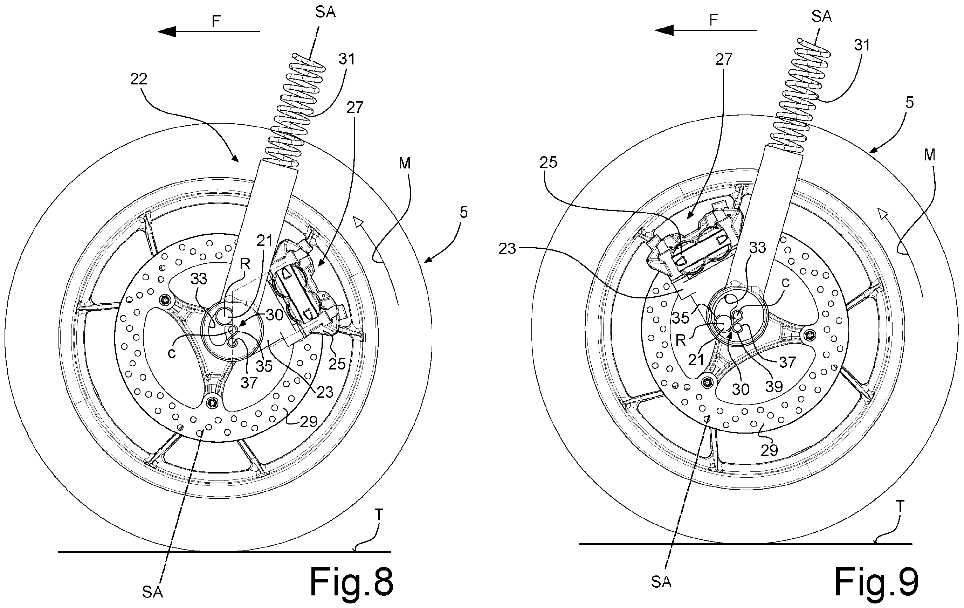

Figs. 8 and 9 show these two extreme positions in a different configuration, where the braking action causes a vertical lowering of the axis R of the front steered wheel R with respect to the steering structure 22 and therefore a lifting of the vehicle with respect to the ground T, *i.e.* a movement opposite to that of sinking following compression of the suspension (anti-dive effect).

More specifically, with reference to Figs. 6 and 7, the same components described with reference to Figs. 2 and 3 are mounted in such a way that the slot 33, which defines or represents the path that the pin or spindle 21 of the front steered wheel 5 can travel, is located alongside the track axis C and more exactly on the side of this axis C facing the rear drive wheel 3. In Fig. 6 the elastic element 35 is in the condition of minimum deformation (minimum energy) and pushes the pin or spindle 21 of the front steered wheel 5 towards the lower end of the slot 33. When the vehicle brakes, the torque M applied to the arm 23 pushes said arm 25 to rotate clockwise in the figure, until it reaches the position of Fig. 7, deforming the elastic member 35, wherein energy accumulates. The pin or spindle 21 of the front steered wheel 5 moves in a position above the axis C of the steering structure 22. This results in a lowering of the steering structure 22 and therefore of the vehicle front end. This lowering is added to the downward movement caused by the load transfer during braking.

In Figs. 8 and 9 the opposite situation occurs, since the arched slot 33 is placed in front of the axis C with respect to the advancement direction F of the vehicle. In Fig. 8 the vehicle is not braked. The elastic element 35 is in minimum energy conditions and stresses the pin or spindle 21 towards the upper end of the arched slot 33. When the motor vehicle 1 brakes, the torque generated by the braking rotates the arm 23 clockwise causing a deformation of the elastic member 35 and a consequent displacement of the pin or spindle 21 along the slot 33 towards the lower end thereof. The steering structure 22 rises with respect to the ground T. The relative movement between the pin or spindle 21 and the steering structure 22 is therefore opposite to the sinking movement due to the compression of the suspension 31 caused by the load transfer during braking.

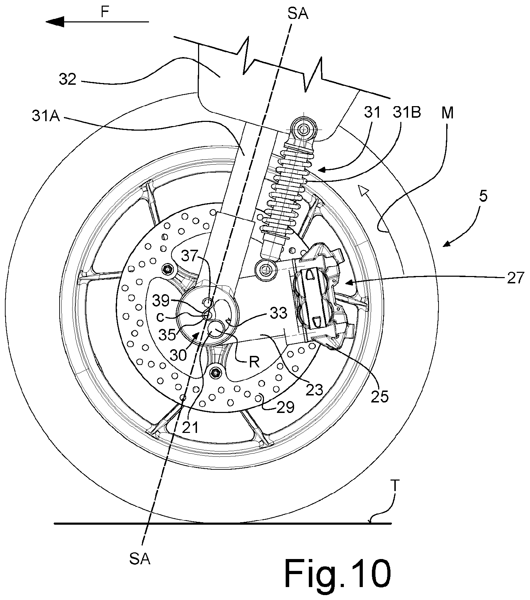

Fig. 10 shows a modified embodiment, only in the position of non-braking vehicle. The same reference numbers indicate equal or equivalent parts to those already described with reference to the embodiments illustrated in Figs. 2 to 9. These parts will not be described again. The main difference between the embodiment of Fig. 10 and the embodiment of Figs. 6 and 7 consists in that the damped suspension is constrained below the support arm 23 of the calipers 25 of the brake 27 and above a structure 32. The spring-shock absorber assembly of the suspension 31 is indicated with 31B, while 31A indicates a guide that connects the device 30 to the structure 32, for example a fork. With this arrangement, when the motor vehicle 1 brakes, the torque acting on the calipers 25 of the brake 27 causes the displacement of the arm 23 and therefore of the pin or spindle 21 along a path defined by the slot 33, as already described above. In addition, there is also a simultaneous compression of the spring-shock absorber assembly 31B, whereby the system thus configured functions as a mechanical anti-dive.

It should be understood that the drawings represent illustrative diagrams of the operating principle of the device object of the present invention. Its practical embodiments can also substantially differ from what is schematically illustrated and described herein. For example, the counteracting force that opposes the displacement of the pin or spindle of the wheel with respect to the steering system can be generated by more sophisticated mechanisms, for example also damped and which can include elastic elements with elastic characteristics that can vary linearly or non-linearly with deformation, so as to obtain the desired dynamic behavior of the motor vehicle. Furthermore, the slot 33 has been used to represent, by way of example, a guide system of the pin or spindle 21 of the wheel with respect to the steering structure. It should be understood that other guidance systems are possible. For example, the spindle 21 of the front steered wheel 5 can be attached to an eccentric housed in a cylindrical seat. The guide (in the example, the slot 33) can directly engage the spindle or pin 21, but this is not necessary. Any mechanical member rigidly connected to the spindle on which the front steered wheel 5 is in turn rotatably supported can be engaged in the guide.

## Claims

1. A saddle-type motor vehicle (1), comprising a frame (7), a rear drive wheel (3) and at least one front steered wheel (5), said front steered wheel (5) being supported by a spindle (21) constrained to a steering structure (22) and associated to a damped suspension (31); wherein a device (30) is interposed between the spindle (21) and the steering structure (22), for varying the position of a rotation axis (R) of the front steered wheel (5) with respect to the steering structure (22) as a function of a braking action of the saddle-type motor vehicle (1); **characterized in that** the device (30) for varying the position of the rotation axis (R) of the front steered wheel (5) with respect to the steering structure (22) comprises a guide seat (33) to which the spindle (21) is movably engaged.

2. The motor vehicle of claim 1, wherein the guide seat (33) is integral with the steering structure (22).

3. The motor vehicle of claim 1 or 2, wherein the device (30) for varying the position of the rotation axis (R) of the front steered wheel (5) with respect to the steering structure (22) is configured to cause said variation of the position of said rotation axis (R) in response to a dynamic load caused by a braking torque acting on the front steered wheel (5).

4. The motor vehicle of claim 1 or 2 or 3, wherein the device (30) is configured to cause a variation of the trail of the motor vehicle (1) by means of a displacement with a mainly horizontal component of the rotation axis (R) of the front steered wheel (5) with respect to the steering structure (22).

5. The motor vehicle of claim 4, wherein said displacement is such as to cause a reduction of the trail in response to the braking torque.

6. The motor vehicle of claim 1 or 2 or 3, wherein the device (30) is configured to cause a movement with a mainly vertical component of the rotation axis (R) of the front steered wheel (5) with respect to the steering structure (22), in particular said displacement is such as to have an effect which is preferably an anti-dive one.

7. The motor vehicle of one or more of the preceding claims, wherein the guide seat (33) is configured to cause a variation in the distance between the rotation axis (R) of the steered wheel (5) and a steering axis (SA-SA) defined by the steering structure (22).

8. The motor vehicle of one or more of the preceding claims, wherein the guide seat (33) is configured to define a curvilinear path of the spindle (21).

9. The motor vehicle of claim 8, wherein the guide seat (33) is configured to define a path of the spindle (21) according to an arc of a circumference around an axis (C) which is parallel and eccentric to the rotation axis (R) of the front steered wheel (5).

10. The motor vehicle of one or more of the preceding claims, wherein the device (30) comprises a counteracting member (35) adapted to generate a counteracting force which is opposed the movement of the rotation axis (R) of the front steered wheel (5) with respect to the steering structure (22).

11. The motor vehicle of claim 10, wherein said counteracting member (35) comprises an elastic member adapted to be elastically deformed by the effect of the dynamic load generated by the braking of the vehicle.

12. The motor vehicle of one or more of the preceding claims, comprising an arm (23) supporting a brake (25), the arm (23) being integral with the spindle (21) of the front steered wheel (5), so that the braking torque generated by the brake (25) on the wheel causes a rotation of the spindle (21) and of the arm (23) supporting the brake around an axis (C) which is parallel to the rotation axis (R) of the wheel and eccentric thereto.

13. The motor vehicle of one or more of the preceding claims, wherein the damped suspension (31) is arranged in such a way that the variation of the position of the rotation axis (R) of the wheel with respect to the steering structure (22) causes a displacement of a shock absorber-spring assembly (31B) of the damped suspension.

14. The motor vehicle of claim 13, wherein the displacement caused by the braking torque has an anti-dive effect.

15. The motor vehicle of claims 12 and 14, wherein the damped suspension (31) comprises the shock absorber-spring assembly (31B) constrained to the arm (23) supporting the brake (25), so that the rotation of the arm (23) caused by the braking torque causes a variation of the displacement of the shock absorber-spring assembly (31B), preferably a compression of the shock absorber-spring assembly (31B).

## Patentansprüche

1. Kraftfahrzeug (1) vom Satteltyp mit einem Rahmen (7), einem hinteren Antriebsrad (3) und mindestens einem vorderen gelenkten Rad (5) wobei das vordere gelenkten Rad (5) durch eine Spindel (21) getragen wird, die an eine Lenkstruktur (22) gebunden ist und einer gedämpften Aufhängung (31) zugeordnet ist, wobei eine Vorrichtung (30) zwischen der Spindel (21) und der Lenkstruktur (22) zur Änderung der Position einer Drehachse (R) des vorderen gelenkten Rads (5) mit Bezug auf die Lenkstruktur (22) als eine Funktion einer Bremsaktion des Kraftfahrzeugs (1) vom Satteltyp zwischengefügt ist, **dadurch gekennzeichnet, dass** die Vorrichtung (30) zur Änderung der Position der Drehachse (R) des gelenkten vorderen Rades (5) mit Bezug auf die Lenkstruktur (22) einen Führungssitz (33) aufweist, an dem die Spindel (21) bewegbar angreift.

2. Kraftfahrzeug nach Anspruch 1, wobei der Führungssitz (33) integral mit der Lenkstruktur (22) ist.

3. Kraftfahrzeug nach Anspruch 1 oder 2, wobei die Vorrichtung (30) zur Änderung der Position der Drehachse (R) des vorderen gelenkten Rads mit Bezug auf die Lenkstruktur (22) ausgebildet ist, um die Änderung der Position der Drehachse (R) in Abhängigkeit von einer dynamischen Last zu verursachen, die durch ein Bremsmoment verursacht wird, das auf das gelenkte vordere Rad (5) wirkt.

4. Kraftfahrzeug nach Anspruch 1 oder 2 oder 3, wobei die Vorrichtung (30) ausgebildet ist, um eine Änderung des Nachlaufs des Kraftfahrzeugs (1) mittels einer Verlagerung mit einer hauptsächlich horizontalen Komponente der Drehachse (R) des vorderen gelenkten Rads (5) mit Bezug auf die Lenkstruktur (22) zu bewirken.

5. Kraftfahrzeug nach Anspruch 4, wobei die Verlagerung derart ist, um eine Reduktion des Nachlaufs in Abhängigkeit von dem Bremsmoment zu verursachen.

6. Kraftfahrzeug nach Anspruch 1 oder 2 oder 3, wobei die Vorrichtung (30) ausgebildet ist, um eine Bewegung mit einer hauptsächlich vertikalen Komponente der Drehachse (R) des gelenkten vorderen Rades (5) mit Bezug auf die Lenkstruktur (22) zu bewirken, insbesondere ist die Verlagerung so, um einen Effekt zu haben, der vorzugsweise einer gegen das Absenken ist.

7. Kraftfahrzeug nach einem oder mehreren der vorstehenden Ansprüche, wobei der Führungssitz (33) ausgebildet ist, um eine Änderung des Abstands zwischen der Drehachse (R) des gelenkten Rads (5) und einer Lenkachse (SA-SA) zu bewirken, die durch die Lenkstruktur (22) definiert ist.

8. Kraftfahrzeug nach einem oder mehreren der vorstehenden Ansprüche, wobei der Führungssitz (33) ausgebildet ist, um einen krummlinigen Weg der Spindel (21) zu definieren.

9. Kraftfahrzeug nach Anspruch 8, wobei der Führungssitz (33) ausgebildet ist, um einen Weg der Spindel (21) entsprechend eines Bogens eines Umfangs um eine Achse (C) zu definieren, die parallel und exzentrisch zu der Drehachse (R) des vorderen gelenkten Rads (5) ist.

10. Kraftfahrzeug nach einem oder mehreren der vorstehenden Ansprüche, wobei die Vorrichtung (30) ein Gegenwirkungselement (35) aufweist, das ausgebildet ist, um eine Gegenwirkungskraft zu erzeugen, die der Bewegung der Drehachse (R) des vorderen gelenkten Rads (5) mit Bezug auf die Lenkstruktur (22) entgegengesetzt ist.

11. Kraftfahrzeugen Anspruch 10, wobei das Gegenwirkungselement (35) ein elastisches Element aufweist, das ausgebildet ist, um elastisch durch den Effekt der dynamischen Last verformt zu werden, die durch das Bremsen des Fahrzeugs verursacht wird.

12. Kraftfahrzeug nach einem oder mehreren der vorstehenden Ansprüche mit einem Arm (23), der eine Bremse (25) stützt, wobei der Arm (23) integral mit der Spindel (21) des gelenkten vorderen Rads (5) ist, sodass das Bremsmoment, das durch die Bremse (25) auf dem Rad verursacht wird, eine Drehung der Spindel (21) und des Arms (23), der die Bremse trägt, um eine Achse (C) verursacht, die parallel zu der Drehachse (R) des Rads und exzentrisch dazu ist.

13. Kraftfahrzeug nach einem oder mehreren der vorstehenden Ansprüche, wobei die gedämpfte Aufhängung (31) so angeordnet ist, dass eine Änderung der Position der Drehachse (R) des Rads mit Bezug auf die Lenkstruktur (22) eine Verlagerung einer stoßdämpfendenden Federanordnung (31B) der gedämpften Aufhängung verursacht.

14. Kraftfahrzeug nach Anspruch 13, wobei die Verlagerung, die durch das Bremsmoment verursacht wird, einen Anti-Absenkungseffekt hat.

15. Kraftfahrzeug nach Anspruch 12 und 14, wobei die gedämpfte Aufhängung (31) die stoßdämpfende Federanordnung (31B) aufweist, die an den Arm (23) gebunden ist, der die Bremse (25) trägt, so das die Drehung des Arms (23), die durch das Bremsmoment verursacht wird, eine Änderung der Verlagerung der stoßdämpfende Federanordnung (31B) bewirkt, vorzugsweise eine Kompression der stoßdämpfendenden Federanordnung (31 B).

## Revendications

1. Un véhicule à moteur du type à selle (1), comprenant un cadre (7), une roue motrice arrière (3) et au moins une roue avant directrice (5), ladite roue avant directrice (5) étant supportée par une broche (21) fixée à une structure de direction (22) et associée à une suspension amortie (31) ; dans lequel un dispositif (30) est interposé entre la broche (21) et la structure de direction (22), pour faire varier la position d'un axe de rotation (R) de la roue avant motrice (5) par rapport à la structure de direction (22) en fonction d'une action de freinage du véhicule à moteur du type à selle (1) ; **caractérisé en ce que** le dispositif (30) pour faire varier la position de l'axe de rotation (R) de la roue avant directrice (5) par rapport à la structure de direction (22) comprend un siège de guidage (33) avec lequel la broche (21) vient en prise de façon mobile.

2. Le véhicule à moteur selon la revendication 1, dans lequel le siège de guidage (33) est solidaire de la structure de direction (22).

3. Le véhicule à moteur selon la revendication 1 ou 2, dans lequel le dispositif (30) pour faire varier la position de l'axe de rotation (R) de la roue avant directrice (5) par rapport à la structure de direction (22) est configuré pour provoquer la variation de la position dudit axe de rotation (R) en réponse à une charge dynamique provoquée par un couple de freinage agissant sur la roue avant directrice (5).

4. Le véhicule à moteur selon la revendication 1 ou 2 ou 3, dans lequel le dispositif (30) est configuré pour provoquer une variation de la traînée du véhicule à moteur (1) au moyen d'un déplacement avec un composant essentiellement horizontal de l'axe de rotation (R) de la roue avant directrice (5) par rapport à la structure de direction (22).

5. Le véhicule à moteur selon la revendication 4, dans lequel ledit déplacement est tel qu'il provoque une réduction de la traînée en réponse au couple de freinage.

6. Le véhicule à moteur selon la revendication 1 ou 2 ou 3, dans lequel le dispositif (30) est configuré pour provoquer un mouvement avec un composant essentiellement vertical de l'axe de rotation (R) de la roue avant directrice (5) par rapport à la structure de direction (22), en particulier ledit déplacement est tel qu'il a un effet qui est de préférence un effet anti-plongée.

7. Le véhicule à moteur selon l'une ou plusieurs des revendications précédentes, dans lequel le siège de guidage (33) est configuré pour provoquer une variation de la distance entre l'axe de rotation (R) de la roue avant directrice (5) et un axe de direction (SA-SA) formé par la structure de direction (22).

8. Le véhicule à moteur selon l'une ou plusieurs des revendications précédentes, dans lequel le siège de guidage (33) est configuré pour former un chemin curviligne de la broche (21).

9. Le véhicule à moteur selon la revendication 8, dans lequel le siège de guidage (33) est configuré pour former un chemin pour la broche (21) selon un arc dont la circonférence autour d'un axe (C) qui est parallèle et excentrique par rapport à l'axe de rotation (R) de la roue avant directrice (5).

10. Le véhicule à moteur selon l'une ou plusieurs des revendications précédentes, dans lequel le dispositif (30) comprend un organe de contre-action (35) apte à générer une force de contre-action qui est opposée au mouvement de l'axe de rotation (R) de la roue avant directrice (5) par rapport à la structure de direction (22).

11. Le véhicule à moteur selon la revendication 10, dans lequel ledit organe de contre-action (35) comprend un organe élastique apte à être déformé élastiquement sous l'effet de la charge dynamique générée par le freinage du véhicule.

12. Le véhicule à moteur selon l'une ou plusieurs des revendications précédentes, comprenant un bras (23) supportant un frein (25), le bras (23) étant solidaire de la broche (21) de la roue avant directrice (5), de sorte que le couple de freinage généré par le frein (25) sur la roue provoque une rotation de la broche (21) et du bras (23) supportant le frein autour d'un axe (C) qui est parallèle à l'axe de rotation (R) de la roue et excentrique par rapport à elle.

13. Le véhicule à moteur selon l'une ou plusieurs des revendications précédentes, dans lequel la suspension amortie (31) est agencée de telle manière que la variation de la position de l'axe de rotation (R) de la roue par rapport à la structure de direction (22) provoque un déplacement d'un ensemble d'absorption de chocs à ressort (31B) de la suspension amortie.

14. Le véhicule à moteur selon la revendication 13, dans lequel le déplacement provoqué par le couple de freinage a un effet anti-plongée.

15. Le véhicule à moteur selon les revendications 12 et 14, dans lequel la suspension amortie (31) comprend l'assemblage d'absorption de chocs à ressort (31B) fixé à l'arbre (23) supportant le frein (25), de sorte que la rotation du bras (23) provoquée par le couple de freinage provoque une variation du déplacement de l'ensemble d'absorption de chocs à ressort (31B), de préférence une compression de l'ensemble d'absorption de chocs à ressort (31B).
